(19)

Europäisches
Patentamt
European
Patent Office
Office européen
des brevets

(11) **EP 3 816 672 A1**

(12) **EUROPEAN PATENT APPLICATION**

(43) Date of publication:
**05.05.2021 Bulletin 2021/18**

(51) Int Cl.:
**G01S 19/24** *(2010.01)*          **H04B 7/185** *(2006.01)*

(21) Application number: **19205744.6**

(22) Date of filing: **28.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FRAUNHOFER-GESELLSCHAFT zur Förderung der angewandten Forschung e.V. 80686 München (DE)**

(72) Inventors:
• **CORTES VIDAL, Inigo**
  **91058 Erlangen (DE)**

• **RÜGAMER, Alexander**
  **91058 Erlangen (DE)**
• **VAN DER MERWE, Johannes Rossouw**
  **91058 Erlangen (DE)**
• **OVERBECK, Matthias**
  **91058 Erlangen (DE)**
• **STROBEL, Christian**
  **91058 Erlangen (DE)**

(74) Representative: **Zimmermann, Tankred Klaus et al Schoppe, Zimmermann, Stöckeler Zinkler, Schenk & Partner mbB Patentanwälte Radlkoferstrasse 2 81373 München (DE)**

(54) **ADAPTIVE WEIGHTING MATRIX FOR ADAPTIVE TRACKING LOOPS**

(57)    An apparatus for obtaining a weighting matrix, the weighting matrix to be used to obtain one or more updated parameters affecting a time of response of a tracking loop; wherein the apparatus is configured to receive from a plurality of tracking loops respective loop dynamic estimates and/or loop noise estimates, weight each of the received loop dynamic estimates and/or each of the received loop noise estimates based on a current value of the parameter of the tracking loop providing the respective loop dynamic estimates and/or the respective loop noise estimates, and combine the weighted loop dynamic estimates and/or the weighted loop noise estimates, so as to obtain the weighting matrix.

Fig. 6

**Description**

The present invention relates to the field of wireless communication systems or networks, more specifically to an apparatus for obtaining a weighting matrix, a receiver for determining user location information by processing signals broad casted by satellites and a method for obtaining a weighting matrix.

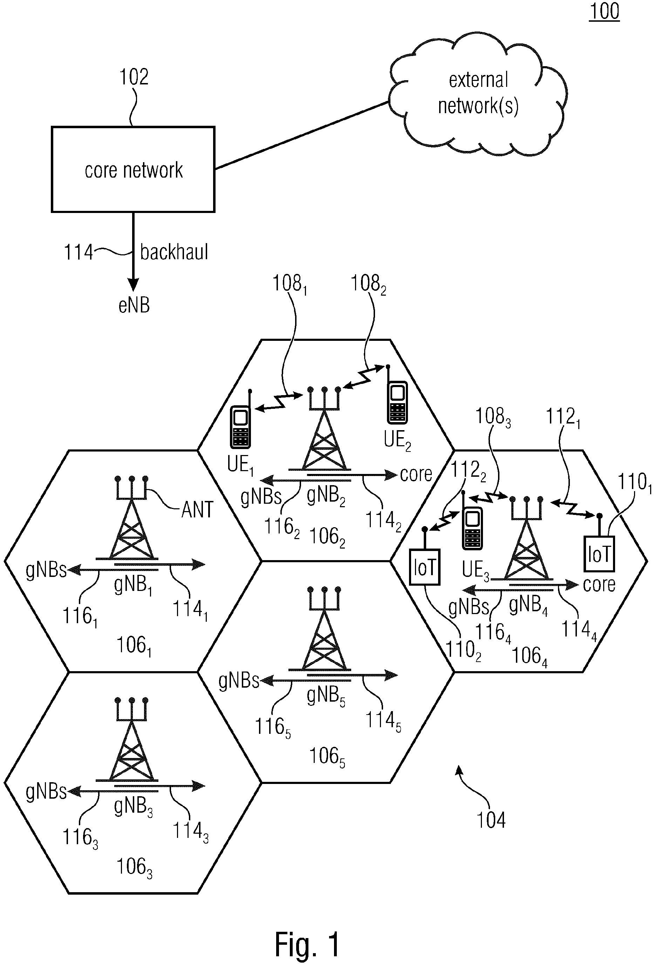

Fig. 1 below is a schematic representation of an example of a terrestrial wireless network 100 including a core network 102 and a radio access network 104. The radio access network 104 may include a plurality of base stations $gNB_1$ to $gNB_5$, each serving a specific area surrounding the base station schematically represented by respective cells $106_1$ to $106_5$. The base stations are provided to serve users within a cell. The term base station, BS, refers to as gNB in 5G networks, eNB in UMTS/LTE/LTE-A/ LTE-A Pro, or just BS in other mobile communication standards. A user may be a stationary device or a mobile device. Further, the wireless communication system may be accessed by mobile or stationary IoT devices which connect to a base station or to a user. The mobile devices or the IoT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enable these devices to collect and exchange data across an existing network infrastructure. Fig. 1 shows an exemplary view of only five cells, however, the wireless communication system may include more such cells. Fig. 1 shows two users $UE_1$ and $UE_2$, also referred to as user equipment, UE, that are in cell $106_2$ and that are served by base station $gNB_2$. Another user $UE_3$ is shown in cell $106_4$ which is served by base station $gNB_4$. The arrows $108_1$, $108_2$ and $108_3$ schematically represent uplink/downlink connections for transmitting data from a user $UE_1$, $UE_2$ and $UE_3$ to the base stations $gNB_2$, $gNB_4$ or for transmitting data from the base stations $gNB_2$, $gNB_4$ to the users $UE_1$, $UE_2$, $UE_3$. Further, Fig. 1 shows two IoT devices $110_1$ and $110_2$ in cell $106_4$, which may be stationary or mobile devices. The IoT device $110_1$ accesses the wireless communication system via the base station $gNB_4$ to receive and transmit data as schematically represented by arrow $112_1$. The IoT device $110_2$ accesses the wireless communication system via the user $UE_3$ as is schematically represented by arrow $112_2$. The respective base station $gNB_1$ to $gNB_5$ may be connected to the core network 102, e.g. via the S1 interface, via respective backhaul links $114_1$ to $114_5$, which are schematically represented in Fig. 1 by the arrows pointing to "core". The core network 102 may be connected to one or more external networks. Further, some or all of the respective base station $gNB_1$ to $gNB_5$ may connected, e.g. via the S1 or X2 interface or XN interface in NR, with each other via respective backhaul links $116_1$ to $116_5$, which are schematically represented in Fig. 1 by the arrows pointing to "gNBs". The wireless network or communication system depicted in Fig. 1 may by a heterogeneous network having two distinct overlaid networks, a network of macro cells with each macro cell including a macro base station, like base station $gNB_1$ to $gNB_5$, and a network of small cell base stations (not shown in Fig. 1), like femto or pico base stations.

For data transmission a physical resource grid may be used. The physical resource grid may comprise a set of resource elements to which various physical channels and physical signals are mapped. For example, the physical channels may include the physical downlink and uplink shared channels (PDSCH, PUSCH) carrying user specific data, also referred to as downlink and uplink payload data, the physical broadcast channel (PBCH) carrying for example a master information block (MIB) and a system information block (SIB), the physical downlink and uplink control channels (PDCCH, PUCCH) carrying for example the downlink control information (DCI), etc. For the uplink, the physical channels may further include the physical random access channel (PRACH or RACH) used by UEs for accessing the network once a UE synchronized and obtained the MIB and SIB. The physical signals may comprise reference signals (RS), synchronization signals and the like. The resource grid may comprise a frame or radioframe having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple accesses, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR, New Radio, standard.

In the wireless communication network as shown in Fig. 1 the radio access network 104 may be a heterogeneous network including a network of primary cells, each including a primary base station, also referred to as a macro base station. Further, a plurality of secondary base stations, also referred to as small cell base stations, may be provided for each of the macro cells.

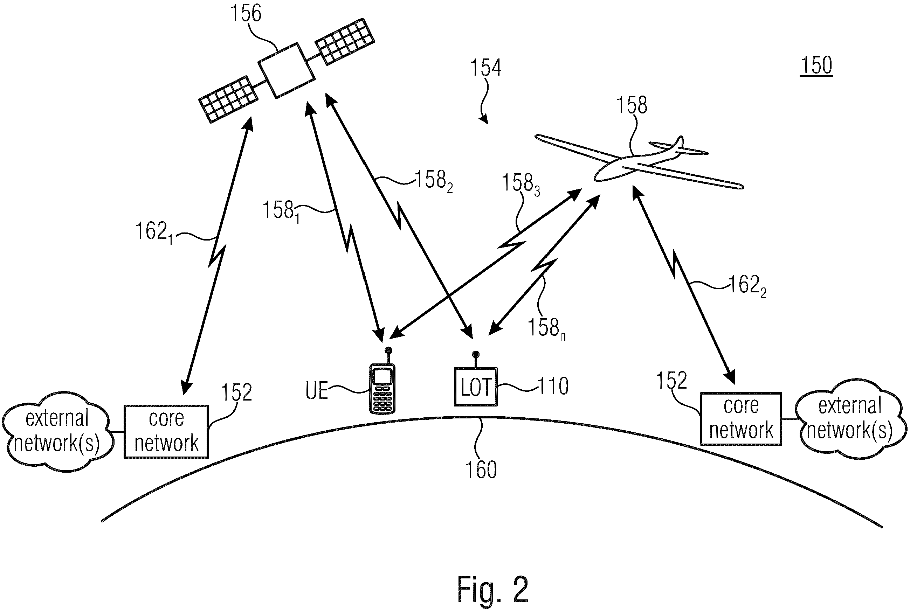

In addition to the above described terrestrial wireless network also non-terrestrial wireless communication networks exist. Fig. 2 below is a schematic representation of an example of a non-terrestrial wireless communication network 150 including a core network 152 and a radio access network 154. Other than the terrestrial wireless network of Fig. 1, the non-terrestrial wireless network 150 includes a plurality of spaceborne transceivers 156, like satellites, and/or airborne transceivers 158, like unmanned aircraft systems. The respective spaceborne or airborne transceivers 156, 158 may be implemented in respective spaceborne or airborne vehicles, like the above mentioned satellites or unmanned aircraft systems. The transceivers 156 and 158 are provided to serve one or more users, like the UE or the IoT device 110 shown in Fig. 2, which are provided on or above ground 160. The UE and the IoT device may be devices as described above with reference to Fig. 1. The arrows $158_1$ to $158_4$ schematically represent uplink/downlink connections for communicating data between the user UE, 110 and the respective transceiver 156, 158. The transceivers 156, 158 are connected to the core network 152 as is schematically represented by the arrows $162_1$, $162_2$. The above described non-terrestrial wireless communication network or system may operate in a similar way as the terrestrial system described above with reference to Fig. 1, for example in accordance with the LTE-advanced pro standard or the 5G or NR, new radio, standard.

It is noted that the information in the above section is only for enhancing the understanding of the background of the invention and therefore it may contain information that does not form the prior art that is already known to a person of ordinary skill in the art.

In wireless systems, carrier tracking is an essential task that allows the receiver to precisely synchronize with the carrier of the incoming signals. That is, in radio navigation and localization system, the technique to compute the position of a user is based on pseudorange measurements between several transmitters and the receiver. In a global navigation satellite system (GNSS), a GNSS receiver determines the user position, velocity, and precise time (PVT) by processing the signals broadcasted by satellites. Because the satellites are always in motion, the receiver has to continuously acquire and track the signals from the satellites in view, in order to compute an uninterrupted solution, as desired in most applications. Any navigation solution provided by a GNSS receiver is based on the computation of its distance to a set of satellites, by means of extracting the propagation time of the incoming signals travelling through space at the speed of light, according to the satellite and receiver local clocks.

Then, a GNSS receiver finds and locks onto the satellite signals, as disclosed in reference document R1: Elliot D. Kaplan, Christopher J. Hegarty: "Understanding GPS: Principles and Applications", Second edition, 2006 Artech House, Inc., Norwood. Locking onto the signal is referred to as tracking. This is done such that the navigation message can be decoded and that the range to a given satellite can be determined. The better the receiver can track the signal, the better the range estimation, and in turn the more precise and reliable the PVT solution of the receiver. Therefore, it is crucial that a GNSS receiver deploys the best possible means to track the signals. However, noise, receiver dynamics and multipath effects, makes this a challenging task.

Traditionally, to track a signal, a Scalar Tracking Loop (STL) is used. A STL synchronizes to the carrier frequency, carrier phase and code phase of the GNSS signal. The loop consists of a correlator, a discriminator, a loop filter and an oscillator. The integration time and the correlator spacing; the discriminator type; the order and the noise bandwidth of the loop filter; and the used oscillator determine the tracking performance. Depending on the scenario, different loop settings are desired. This makes it difficult to design a loop that is optimal for all scenarios.

One issue with tracking loops is the ability to stay locked onto the signal in the presence of dynamics. Dynamics imply any change to the tracking loop, and are often characterized by changes in position, velocity, acceleration, jerk or even higher orders of change. The specific effect of the dynamics and the capability to stay in lock depend on the loop type (e.g. DLL, PLL or FLL), the loop order and the loop bandwidth. Typically, higher order loops can accommodate higher order dynamics before losing lock; however, this comes at the price of complexity, higher likelihood of instability and delayed responses. Similarly, larger loop bandwidths can respond quicker to disturbances, but also come at the risk of increased instability and loop jitter.

The trade-off between user dynamics and noise compromise the validity of conventional STLs. Therefore, robust tracking techniques are required. These techniques are divided in three main categories as indicated in reference document R2: J.A. López-Salcedo, J. A. D. Peral-Rosado, and G. Seco-Granados, "Survey on robust carrier tracking techniques", IEEE Communication Surveys & Tutorials, vol. 12, no. 2, pp. 670-688, January 2014:

- Constant bandwidth carrier techniques: Techniques related to minor modifications in the STL architecture keeping a constant loop-bandwidth. The integration time, the type of discriminator and the order of the loop filter are the parameters used to improve robustness. However, in harsh scenarios these optimizations do not make the STL robust enough.

- Variable loop-bandwidth tracking techniques: Solves the previous limitation using adaptive loop-bandwidth algorithms, which set a connection between the loop-bandwidth and time- varying scenario conditions. In dynamic scenarios, a fast loop response with a large loop- bandwidth is preferred in order to follow the dynamics, whereas in stationary scenarios a noise-rejecting low bandwidth is appropriate. This category allows adjusting the loop-bandwidth to the optimal value for a given scenario. This invention is a contribution on how to efficiently implement such a variable loop-bandwidth that adapts itself to different scenarios.

- Kalman filter-based tracking techniques: Similar to the second category, the Kalman filtering (KF) implemented in conventional STLs predicts the optimal loop-bandwidth depending on the scenario conditions. In addition, another well-known receiver architecture, where the tracking loops are controlled jointly, uses the KF: vector tracking loop (VTL) (see for example, reference document R3: D. M. B. Matthew Lashley and J. Y. Hung, "A valid comparison of vector and scalar tracking loops", IEEE Transactions on Signal Processing, vol. 56, no. 9, pp. 464-474, April 2010).

Current loop-bandwidth control algorithms that have different loop-bandwidth estimation methods only works for a specific tracking loop configuration. Therefore, a key issue is the generalization of the control method to any type of tracking loop.

Fast Adaptive Bandwidth (FAB) techniques use a loop-bandwidth dependant cost function in order to estimate the optimal noise bandwidth of the loop filter, for example, as disclosed in reference document R4: S. Skone, G. Lachapelle, D. Yao, W. Yu, and R. Watson, "Investigating the Impact of Ionospheric Scintillation using a GPS Software Receiver", in Proceedings of the 18th International Technical Meeting of the Satellite Division of The Institute of Navigation (ION GNSS 2005), September 2005, pp. 1126-1137. This cost function depends on the order of the loop filter, the type of discriminator, the integration time or the correlator spacing. Some of these techniques constrain the loop-bandwidth and use a scaling factor to reduce the loop- bandwidth update in order to avoid instabilities in the loop, for example, as disclosed in reference document R5: K. Muthuraman, Tracking Techniques for GNSS Data/Pilot Signals. Other techniques use the Newton- Raphson method to update the loop-bandwidth, for example, as disclosed in reference document R6: Improvement Of Pseudorange Measurements Accuracy By Using Fast Adaptive Bandwidth Lock Loops, September 2000.

However, the reference document R4 does not disclose true results. The document says that the algorithm is very good because it can reduce the bandwidth from 10 Hz to 5Hz in a simulated scenario of 40dB-Hz and, therefore, there is a noise reduction at the output of the loop filter. This point is however not important, but it is necessary to measure the true jitter at the discriminators output, because maybe the bandwidth is too low and the tracking loop cannot answer fast enough. Then, maybe a bigger bandwidth could lead better results.

According to the reference document R5, adaptive algorithm for a 2nd order PLL and the 3-sigma rule-of-thumb are used. The steady state error is measured using a third order IIR filter after the discriminators output. Then, the derivative of the 3- sigma rule-of-thumb equation regarding the noise bandwidth of the loop filter is performed. Equalling the derivative to null, the optimal bandwidth is achieved. A scaling factor is used to reduce the update of the loop-bandwidth. Also, the loop-bandwidth is constrained in some thresholds.

In accordance with the disclosure of the reference document R6, it estimates the mean and the standard deviation of the discriminators output. A cost function is presented using estimations and the lock threshold. As the mean and the standard deviation is related to the signal's dynamics and the noise statistics of the channel respectively, a relationship between these estimations and the poles of the loop filter is done. Then, equalling to null the derivative of this cost function with respect to the pole leads to the estimation of the optimum pole. Since the value of the poles determines the loop-bandwidth, as the pole changes, the loop- bandwidth changes. Results using a second order FAB-DLL are shown. No more results are presented in this document.

Fuzzy logic based tracking techniques simplify the complexity of the control algorithm. A fuzzy logic control algorithm based on the statistics of the discriminators output can be implemented, for example, as shown in reference document R8: Y. W. Yuan Chen, Haixin Zheng, "Adaptive Bandwidth PLL Design Based on Fuzzy Logic Control", in 2011 4th IEEE International Symposium on Microwave, Antenna, Propagation and EMC Technologies for Wireless Communications, November 2011, pp. 645-648. The main drawback of this technique is the requirement of a previous knowledge of the scenario in order to achieve an efficient tracking performance. Hence, extensive testing and calibration is required.

Kalman filter (KF) based tracking techniques in STLs present best tracking performance while adding more computational burden. An equivalent noise bandwidth (ENB) can be derived from the Kalman gain, that depends on the process noise covariance matrix, error covariance matrix and measurement noise covariance matrix, for example, as disclosed in reference document R9: X. Shun, H. QIN and J. Niu, "Comparison and analysis of GNSS signal tracking performance based on Kalman Filter and traditional loop", WSEAS Transactions on Signal Processing, vol. 9, July 2013. Adapting the KF ENB to a scenario, results in improved performance, for example, as disclosed in reference document in R10: J. H. Won and B. Eissfeller, "A tuning method based on signal-to noise ratio for adaptive PLL and its relationship with equivalent noise bandwidth," IEEE Commun. Lett., vol. 17, no. 2, Feb. 2013. One method takes into account the C/N0 and dynamics estimates to vary the equivalent noise bandwidth each time the loop closes, for example, as disclosed in reference document R11: J.-H. Won, "A novel adaptive digital phase-lock-loop for modern digital gnss receivers", IEEE Communications Letters, vol. 18, no. 1, pp. 46-49, January 2014. Another method implements a two- staged KF, in which one of these stages measures the equivalent noise bandwidth, for example, as disclosed in reference document R12: K. H. Kim, G. I. Jee and J. H. Song, "Carrier Tracking Loop using Adaptive Two-Stage Kalman Filter for High Dynamic Situations", International Journal of Control, Automation and Systems, vol. 6, no. 6, pp. 948-953, December 2008. The efficiency and simplicity of the proposed method simplifies the equivalent loop-bandwidth estimation.

It is thus, the object of the present application is to provide an apparatus for obtaining a weighting matrix, the weighting matrix to be used to obtain one or more updated parameters affecting a time of response of a tracking loop. That is, to obtain a generic weighting matrix independence from the type of loop filter or discriminator, the order of the loop filter or the integration time.

This object is achieved by the subject-matter of the independent claims of the present application.

The present invention provides an apparatus for obtaining a weighting matrix, the weighting matrix to be used to obtain one or more updated parameters, e.g., information of the current adaptive tracking channel and/or information from other adaptive tracking channel, affecting a time of response of a tracking loop; wherein the apparatus is configured to receive from a plurality of tracking loops respective loop dynamic estimates and/or loop noise estimates, weight each of the received loop dynamic estimates and/or each of the received loop noise estimates based on a current value of the parameter of the tracking loop providing the respective loop dynamic estimates and/or the respective loop noise estimates, and combine the weighted loop dynamic estimates and/or the weighted loop noise estimates, so as to obtain the weighting matrix.

In accordance with embodiments, the apparatus comprises an input, e.g. a first input and a second input, to receive the loop dynamic estimates and/or the loop noise estimates from each of the tracking loops, a first processing unit to weight each of the received loop dynamic estimates based on the current value of the parameter of the tracking loop providing the respective loop dynamic estimates, e.g. to calculate weighting vector and to combine (to execute dot product) weighting vector and estimation vector, and/or a second processing unit to weight each of the received loop noise estimates based on the current value of the parameter of the tracking loop providing the respective loop noise estimates, and a third processing unit to combine the weighted loop dynamic estimates and/or the weighted loop noise estimates, so as to obtain a weighting matrix.

In accordance with embodiments, the apparatus further comprises a first function, based on the current value of the parameter, which is used for obtaining the weighted loop dynamic estimates, e.g. sigmoid function Fn(Bn), and a second function, based on the current value of the parameter, which is used for obtaining the weighted loop noise estimates, e.g. sigmoid function Pn(Bn).

In accordance with embodiments, each of the first and second functions is a linear combination of space of functions. In addition, according to the embodiments, the apparatus is further configured to normalized the received loop dynamic estimates and/or the received loop noise estimates.

In accordance with embodiments, the apparatus is further configured to combine the weighting matrix and the respective current value of the parameters to obtain and to provide respective updated parameters for the tracking loop. Furthermore, in accordance with the embodiments, the parameter is any one of a loop bandwidth, a noise bandwidth, a gain and an undamped natural frequency.

The present invention provides a receiver for determining user location information, e.g. user PVT: place, velocity, and time, by processing signals broadcasted by satellites, comprising an apparatus according to any embodiments of the present invention, a first estimator to estimate the loop dynamic estimates from each of the tracking loops, and to provide the respective loop dynamic estimates to the first input of the apparatus, a second estimator to estimate the loop noise estimates from each of the tracking loops, and to provide the respective loop noise estimates to the second input of the apparatus, and a plurality of tracking loops including each of them a loop filter, the tracking loops to receive respective updated loop bandwidths for the loops filter from the apparatus, i.e., each tracking loop has its own loop filter and the loop filter of each tracking loop is updated from the apparatus.

In accordance with the embodiments, the loop filter is a filter used in scalar tracking loops or any type of Kalman filter.

The present invention provides a method for obtaining a weighting matrix, the weighting matrix to be used to obtain one or more updated parameters affecting a time of response of a tracking loop, the method comprising: receiving from a plurality of tracking loops respective loop dynamic estimates and/or loop noise estimates, weighting each of the received loop dynamic estimates and/or each of the received loop noise estimates based on a current value of the parameter of the tracking loop providing the respective loop dynamic estimates and/or respective loop noise estimates, e.g. to calculate weighting vector and to combine (to execute dot product) weighting vector and estimation vector, and combining the weighted loop dynamic estimates and/or the weighted loop noise estimates, so as to obtain a weighting matrix.

In accordance with the embodiments, the method further comprises: combining the weighting matrix and the respective current value of the parameters to obtain and to provide respective updated parameters for the tracking loops. In addition, according to the embodiments, the parameter is any one of a loop bandwidth, a noise bandwidth, a gain and an undamped natural frequency.

The present invention provides a non-transitionary computer program product having a program code for performing, when running on computer, a method according to the present invention.

Further embodiments are described in the attached claims.

Embodiments of the present invention are now described in further detail with reference to the accompanying drawings, in which:

Fig. 1      shows a schematic representation of an example of a wireless communication system;

Fig. 2      is a schematic representation of an example of a non-terrestrial wireless communication network including a core network and a radio access network;

Fig. 3      is a schematic diagram representing an apparatus for obtaining a weighting matrix in accordance with an embodiment of the present application;

Fig. 4      is a schematic diagram representing an apparatus for obtaining a weighting matrix in accordance with another embodiment of the present application;

Fig. 5      is a schematic diagram indicating a flow diagram of an apparatus obtaining a weighting matrix and update a loop-bandwidth as a parameter in accordance with a further embodiment of the present application;

Fig. 6      illustrates a block diagram of the weighting matrix implementation for N tracking loops in accordance with embodiments of the present application;

Fig. 7      illustrates a schematic diagram indicating a flow diagram of the weighting matrix for a particular tracking channel $i$ in accordance with embodiments of the present application;

Fig. 8      represents a block diagram of the weighting matrix in accordance with embodiments of the present application;

Fig. 9      represents a block diagram of particular loop-bandwidth control algorithm implementation in a scalar tracking loop in accordance with embodiments of the present application; and

Fig. 10      illustrates an example of a computer system on which units or modules as well as the steps of the methods described in accordance with the inventive approach may execute.

Embodiments of the present invention are now described in more detail with reference to the accompanying drawings in which the same or similar elements have the same reference signs assigned. At first, some necessary functions for understanding the present invention are explained.

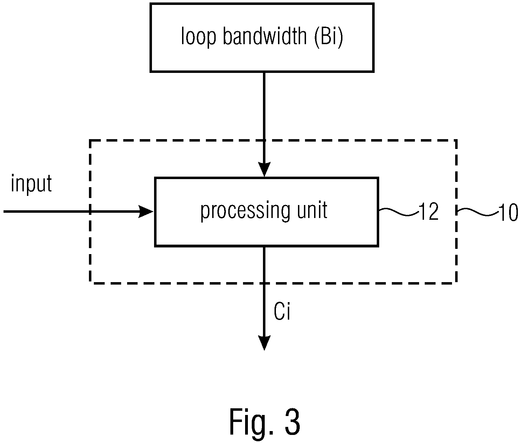

Fig. 3 shows a schematic diagram of an apparatus for obtaining a weighting matrix in accordance with an embodiment of the present application. The apparatus 10 comprises a processing unit 12, i.e., in Fig. 3, only the processing unit 12 is indicated, however, the apparatus 10 further comprises an I/O interface or antenna, memories and so on. The processing unit 12 receives information from tracking channel regarding to a parameter of adaptive tracking channel i, i.e., the current adaptive channel loop-bandwidth Bi, and a plurality of tracking loops respective loop dynamic estimates and/or loop noise estimates via input. Then, the processing unit 12 weights each of the received loop dynamic estimates and/or each of the received loop noise estimates based on a current value of the parameter, i.e., the loop bandwidth, of the tracking loop providing the respective loop dynamic estimates and/or the respective loop noise estimates, and combines the weighted loop dynamic estimates and/or the weighted loop noise estimates, so as to obtain the weighting matrix Ci.

In Fig. 3, loop-bandwidth Bi is indicated as a parameter from the current adaptive channel, however, other information, e.g., a noise bandwidth, again and undamped natural frequency may be also provided to the processing unit 12. In addition, addition to the information from the current adaptive channel, information from other tracking channel may be also provided. In case information from the current adaptive tracking channel and from the other tracking channel is provided, then, it is possible to combine the information from the current adaptive tracking channel with the information from the other tracking channel to obtain the weighting matrix. That is, it is possible to combine PLL (phase lock loop) with DLL (delay lock loop), or FLL (frequency lock loop) with PLL and etc. This also applies to other embodiments as disclosed below.

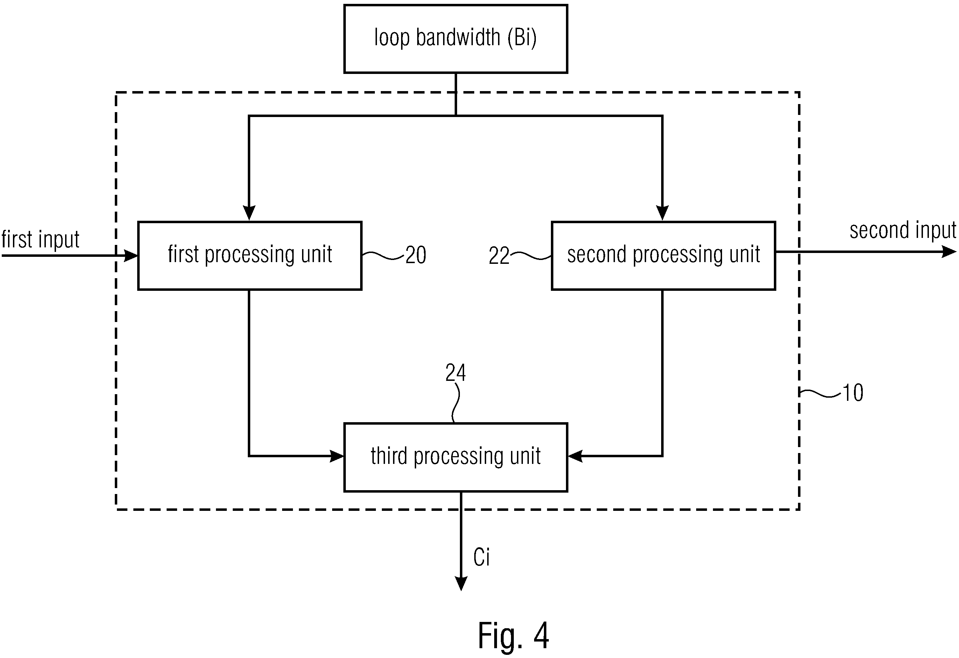

Fig. 4 shows an apparatus for obtaining a weighting matrix in accordance with another embodiment of the present application. In Fig. 4, it is shown the case that tracking loop i to simplify the explanation. The apparatus 10 comprises a first processing unit 20, a second processing unit 22, and a third processing unit 24. The first processing unit 20 is configured to receive the loop dynamic estimate from the tracking loop i via a first input and to weight the received loop dynamic estimates based on the current value of the parameter, e.g., loop-bandwidth Bi, of the tracking loop i providing the loop dynamic estimate, e.g. the first processing unit 20 calculates weighting vector and combines (executes dot product) weighting vector and estimation vector. The second processing unit 22 is configured to receive the loop noise estimates from the tracking loop i via a second input, and to weight the received loop noise estimate based on the current value of the parameter (loop-bandwidth Bi) of the tracking loop providing the loop noise estimate, e.g. the first processing unit calculates weighting vector and combines (executes dot product) weighting vector and estimation vector. The third processing unit 24 is configured to combine the weighted loop dynamic estimate and the weighted loop noise estimate, so as to obtain a weighting matrix Ci.

The first processor 20 may comprise a first function, based on the current value of the parameter, i.e., the current value of the loop bandwidth, which is used for obtaining the weighted loop dynamic estimates, e.g. by using a sigmoid function Fn(Bn) (a function which is a linear combination of space function), and the second processor 22 may comprise a second function, based on the current value of the parameter, which is used for obtaining the weighted loop noise estimates, e.g. by using a sigmoid function Pn(Bn) (a function which is a linear combination of space function).

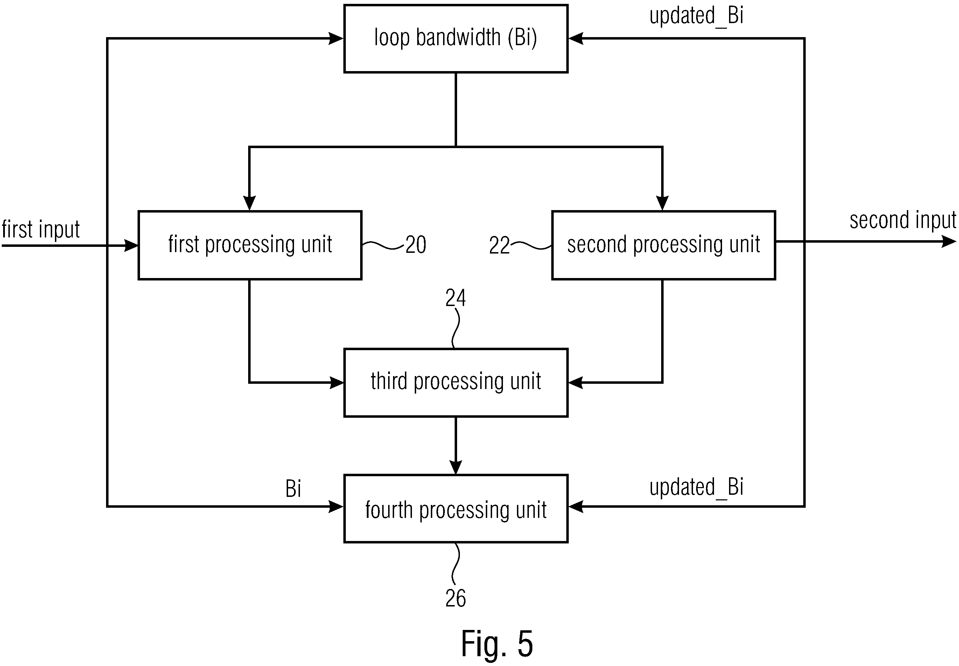

Fig. 5 shows a diagram indicating a flow diagram of an apparatus obtaining a weighting matrix and update a loop-bandwidth as a parameter in accordance with a further embodiment of the present application. The apparatus shown in Fig. 5 further includes a fourth processing unit 26 when compares to the apparatus shown in Fig. 4. The first to third units are the same as shown in Fig. 4. The fourth processing unit 26 is configured to combine the weighting matrix Ci and the current value of the parameter, e.g. the current value of loop-bandwidth Bi, to obtain and to provide updated parameter (updated loop bandwidth) for the tracking loop.

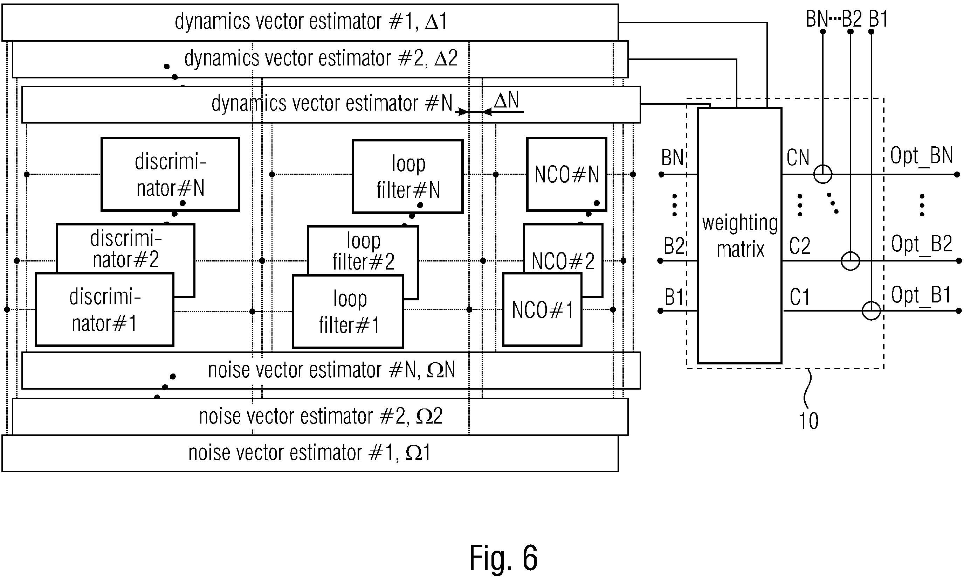

As already mentioned, the invention of the present application relates to an apparatus obtaining a generic weighting matrix used in adaptive feedback control systems. Fig. 6 illustrates a block diagram of the weighting matrix (apparatus) implementation for N tracking loops, e.g., the weighting matrix implementation in the tracking stage (loop) of a GNSS receiver, in accordance with embodiments of the present application. Fig. 6 represents the general case for a system of tracking loops. The block diagram of Fig. 6 shows N tracking loops, were each could be a FLL, PLL or DLL. Every tracking loop could have different discriminators, loop filter orders and integration times. Indicators of the loop dynamics and noise are estimated. The dynamics vector estimator $\Delta_i$ and noise vector estimator $\Omega_i$ of a tracking channel *i* contains a vector of estimations at different tracking stages (loops). The more estimations used, the more precise the information about the loops are.

The system shown in Fig. 6, a tracking loop comprises a discriminator, a tracking loop filter, a numerical control oscillator (NCO), a dynamics vector estimator, a noise vector estimator and an apparatus 10 shown in Fig. 5, for example. In addition, as already mentioned above, each tracking loop may comprise different discriminators and different tracking loop filters. As shown in Fig. 6, loop bandwidths (parameters) of each of tracking loops, i.e., B1, B2, ..., BN, estimated dynamics vectors of each tracking loops, i.e., $\Delta1$, $\Delta2$, ..., $\Delta N$, and estimated noise vectors of each tracking loops, i.e., $\Omega1$, $\Omega2$, ..., $\Omega N$, are inputted to the apparatus 10. Then, the apparatus 10 obtains the weighting matrix as explained above and provides respective updated loop bandwidths (parameters) for each of the tracking loops.

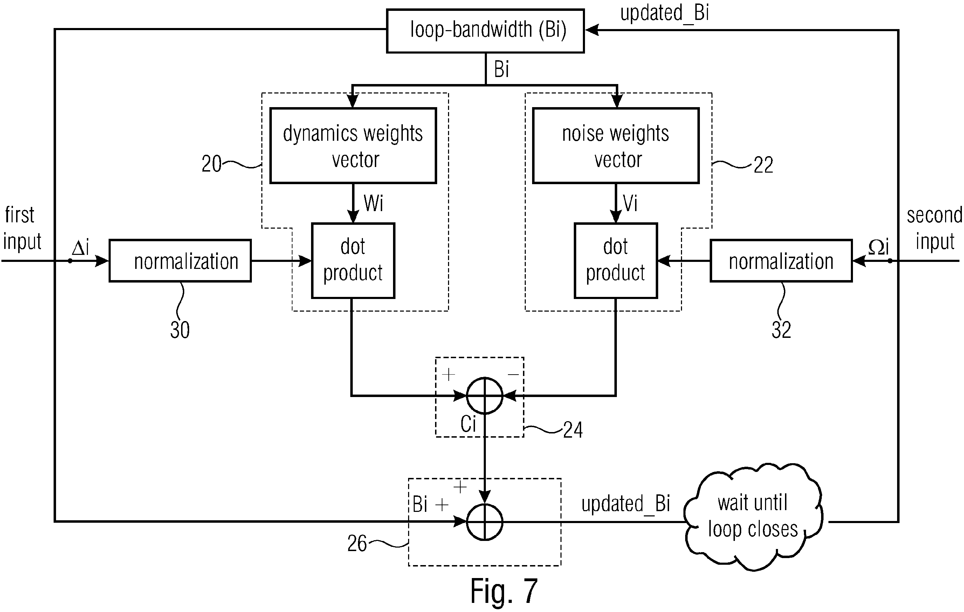

As already mentioned above, the apparatus 10 in accordance with the present application weights and calculates the difference between the dynamic and noise estimates. Fig. 7 illustrates a schematic diagram indicating a flow diagram of the weighting matrix for a particular tracking channel *i* in accordance with embodiments of the present application. As shown in Fig. 7, the updated loop-bandwidth Updated_Bi is generated through a weighting process and is dependent on the current loop-bandwidth Bi and the estimated vectors $\Delta i$, $\Omega i$. The first processing unit 20 receives the estimated dynamics vector $\Delta i$ via the first input and the current loop-bandwidth Bi. The second processing unit 22 receives the estimated noise vector $\Omega i$ via the second input and the current loop-bandwidth Bi. In the apparatus of Fig. 7 further comprises first and second normalization units 30 and 32. The first normalization unit 30 is located between the first input and the first processing unit 20, and the second normalization unit 32 is located between the second input and the second processing unit 22. The first normalization unit 30 normalize the estimated dynamics vector $\Delta i$ inputted via the first input, and then the normalized estimated dynamics vector $\Delta i$ is received by the first processing unit 20. Also, the second normalization unit 32 normalize the estimated noise vector $\Omega i$ inputted via the second input, and then, the normalized estimated noise vector $\Omega i$ is received by the second processing unit 22. At the first and the second processing units 20, 22, the weighting process is executed.

The weighting process uses variable weighting vectors which change according to the current loop-bandwidth Bi. The dot product, at the respective processing unit, i.e., at the first and the second processing units 20, 22, between the weighting vectors and the normalized estimation vectors is performed first. Next, at the third processing unit 24, the difference between the weighted dynamics and the weighted noise are combined, and the weighting matrix Ci is obtained as an output of the third processing unit 24. Then, at the fourth processing unit 26, the weighting matrix Ci is combined with the actual loop-bandwidth Bi and the updated loop-bandwidth Updated_Bi is obtained. The noise bandwidth of the loop filter is typically updated each time the loop is closed as this would result in the best response. However, it could also be closed at slower or irregular intervals, depending on the application.

The weighting matrix defines the sensitivity of the algorithm against dynamics. Hence, it changes the speed of the systems response. The sensibility of the weighting matrix is defined by the maximum value Ci may have. The more sensitive, the larger the maximum value of Ci and the quicker the tracking loop responds against fast transients and higher order dynamics. However, taking into account that the real implementation of these estimators is not ideal, the noise of the estimators limits the sensitivity of the algorithm. There is a point in which, increasing the sensitivity of the algorithm, leads to instabilities.

Regarding the dependence between tracking channels, the weighting matrix can select a jointly or independent loop-bandwidth update. For instance, if a FLL-assisted-PLL is implemented, the FLL bandwidth update has a close relation to the PLL bandwidth update. In addition, if two tracking channels have the same dynamics, because they are tracking a GNSS signal from the same satellite vehicle, there would also be a clear relation between these channels.

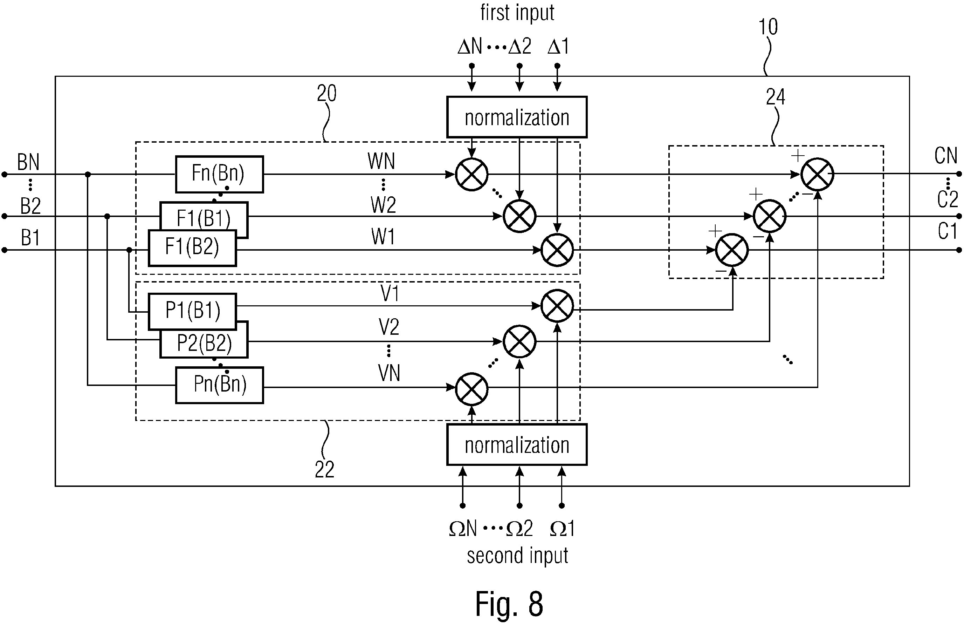

Fig. 8 represents a block diagram of the weighting matrix in accordance with embodiments of the present application, i.e., Fig. 8 shows an apparatus 10 corresponding to the apparatus of Fig. 4 to obtain the generic weighting matrix for N tracking channels. The weighting matrix consists of a vector of functions Fi and Pi. These functions depend on the loop-bandwidth Bi and output the dynamics vector weights Wi and the noise vector weights Vi respectively. Each element of Fi and Pi is a linear combination of a space of functions. This proportional to each element of Fi. If the loop-bandwidth tends to null, Pi is a null vector and Fi contains the maximum value of each element. On the other hand, a higher loop-bandwidth leads to an increase of the elements of Pi while the elements of Fi decrease. An upper threshold in the loop-bandwidth can be set. If the loop-bandwidth reaches this threshold, Fi tends to a null vector and the elements of Pi acquire their maximum values.

In a stationary scenario, the weighting matrix depends primarily on the noise estimations. Since the dynamic estimates are insignificant, the output of the weighting matrix tends to be negative. Therefore, the loop-bandwidth decreases. Decreasing the loop-bandwidth means that the elements of Pi decrease. This means at the same time that the output of the weighting matrix tends to null. The loop-bandwidth will stop to decrease when Pi is a null vector. At this point, the elements of Fi have the maximum value. If certain dynamics appear, the output of the weighting matrix has a positive value, thereby increasing the loop-bandwidth.

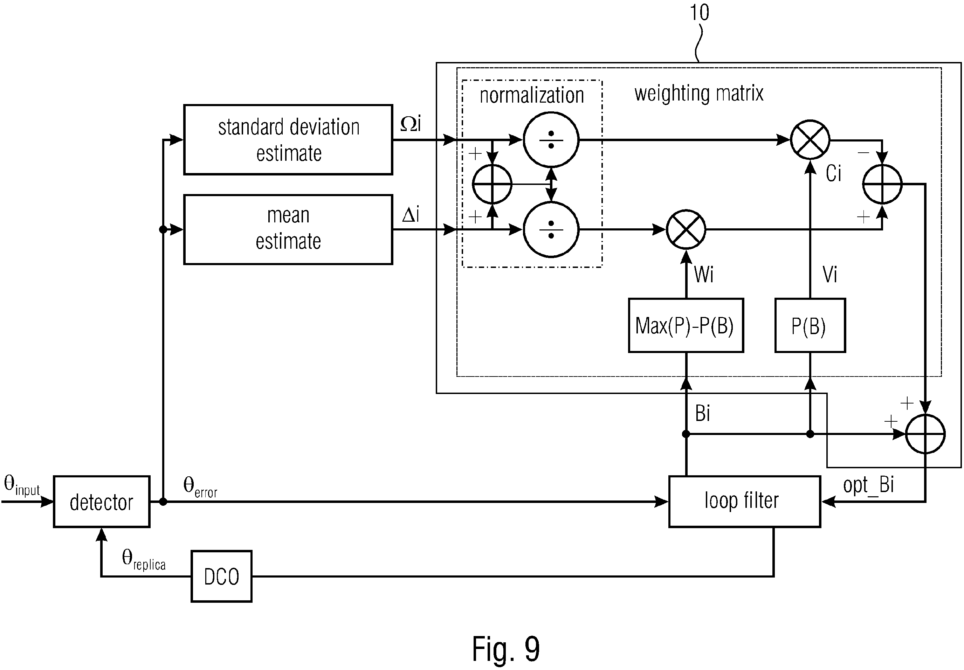

Fig. 9 represents a block diagram of particular loop-bandwidth control algorithm implementation in a scalar tracking loop in accordance with embodiments of the present application, i.e., Fig. 9 shows a particular adaptive loop-bandwidth technique implementation using the weighting matrix obtained by the apparatus 10 of the present application. The dynamic vector estimator and the noise vector estimator have only one element. The dynamics and the noise are estimated measuring the absolute mean and the standard deviation of the discriminators output. The estimations are normalized in order to have unitless values. The vector of functions Fi and Pi also contain one element. A typical function used to select the weight for the noise estimation, is a linear combination of normalized sigmoid functions. However, other functions may also be utilized. Since Fi must be inversely proportional to Pi, the function that weights the dynamic estimation is the inverse of the previous function. In the following, mathematical background of scalar tracking loop is explained.

The Scalar Tracking Loops start at an initial loop-bandwidth $B_{init}$. Each time the loop closes, the loop-bandwidth control algorithm updates the loop-bandwidth.

$$\begin{bmatrix} B_{n+1}^1 \\ B_{n+1}^2 \\ \vdots \\ B_{n+1}^L \end{bmatrix} = \begin{bmatrix} B_n^1 \\ B_n^2 \\ \vdots \\ B_n^L \end{bmatrix} + \begin{bmatrix} C_n^1 \\ C_n^2 \\ \vdots \\ C_n^L \end{bmatrix} = B_{Lx1} + C_{Lx1}$$

L is the number of tracking loops. $C_{Lx1}$ is the output of the control algorithm.

$$C_{Lx1} = I_{LxL} * diag(E_{Lx(K+P)} * W_{(K+P)xL})$$

$I_{LxL}$ is the channel selection matrix. Depending on the relationship between STLs, this matrix selects a jointly or independent loop-bandwidth update. For instance, if FLL-assisted-PLL is used in one of the tracking channels, the FLL bandwidth update has a close relation with the PLL bandwidth update. In addition, if two tracking channels have the same dynamics, because they are receiving a GNSS signal from the same satellite, there is clearly a relation between these channels.

$$I_{LxL} = \begin{bmatrix} i_{1x1} & \cdots & i_{1xL} \\ \vdots & \ddots & \vdots \\ i_{Lx1} & \cdots & i_{LxL} \end{bmatrix}$$

$$0 \leq i_{jxk} \leq 1 \; \forall \, j, k = 1, \ldots, L \cap j \neq k$$

$$i_{jxj} = 1 \; \forall \, j = 1, \ldots, L$$

$E_{Lx(K+P)}$ is the *estimation matrix*. This matrix contains an estimation matrix of signals dynamics and of noise statistics. K is the number of estimators used to measure dynamics and P is the number of estimators used to measure noise. The more estimators used at each stage of the tracking loop, the better the precision of the measurements.

$$E_{Lx(K+P)} = [D_{LxK} \quad N_{LxP}]$$

$W_{(K+P)xL}$ is the *weighting matrix* according to the present application. This matrix is the result of the product between the *scale matrix* $S_{(K+P)xM}$ and the *function matrix* $F_{MxL}$.

$$W_{(K+P)xL} = S_{(K+P)xM} * F_{MxL}$$

Sets the weights of the estimates and depends on the previous loop-bandwidth estimation.

The elements of $S_{(K+P)xM}$ are real values and determine the speed of the algorithm. Each row of $S_{(K+P)xM}$ indicates the weights of the column of functions in $F_{MxL}$. $F_{MxL}$ contains non-negative normalized functions.

The $W_{(K+P)xL}$ must accomplish the following conditions:

- The matrix $W_{(1:K)xL}$ contains real positive elements.

- The matrix $W_{(K+1:K+P)xL}$ contains real negative elements.

- $W_{(1:K)xL}$ is inversely proportional to $W_{(K+1:K+P)xL}$.

According to the present application, the weighting matrix is obtained based on the dynamics and noise estimates of the tracking loop, i.e., it is possible to provide generic algorithm by using obtained weighting matrix. That is, the type of loop or discriminator, the order of the loop filter or the integration time does not affect the algorithm, hence, loop setting flexibility is improved. Furthermore, the weighting matrix is possible to be used not only for scalar tracking loops, but for any kind of feedback loop control systems. In addition, it is possible to use this algorithm in open loop implementations. That is, the weighting matrix can be used for specific known scenarios or for generic scenarios.

In case there is a relationship between the equivalent noise bandwidth of a Kalman Filter and the noise bandwidth of a loop filter, the algorithm can be implemented to update the equivalent noise bandwidth (ENB).

As already mentioned above, the more estimators used, the better precision in the measurement of signals dynamics and noise. Therefore, a faster and more precise update in high dynamic environments is achieved and the lock is not lost.

There are some modification possibilities of the weighting matrix. That is, tuning capability of the functions used in the weighting matrix. For example, if the phase noise of the clock is known, can be added this information into the weighting matrix. Furthermore, it is possible to adapt the weighting matrix to a neural network implementation for digital signal processing.

In addition, when the weighting matrix is determined, it is possible to use a look-up-table based structure to reduce computational burden. For example, in case the obtained weighting matrix is trained, i.e., by using machine learning algorithm by obtaining the feedback and calibrating the weighting matrix, the trained weighting matrix is stored into the memory and used as a look-up-table.

Although some aspects of the described concept have been described in the context of a system, it is clear that these aspects also represent a description of the corresponding method, where a block or a device corresponds to a method step or a feature of a method step. Analogously, aspects described in the context of a method step also represent a description of a corresponding block or item or feature of a corresponding apparatus. In addition, the above explained solution using the blacklist is also applicable for other cases, for example, in case the occurrence of the in-line interference between the moving transmission points, or between the terrestrial transmission point and the non-terrestrial transmission point, or between the stationary transmission point and the non-stationary transmission point.

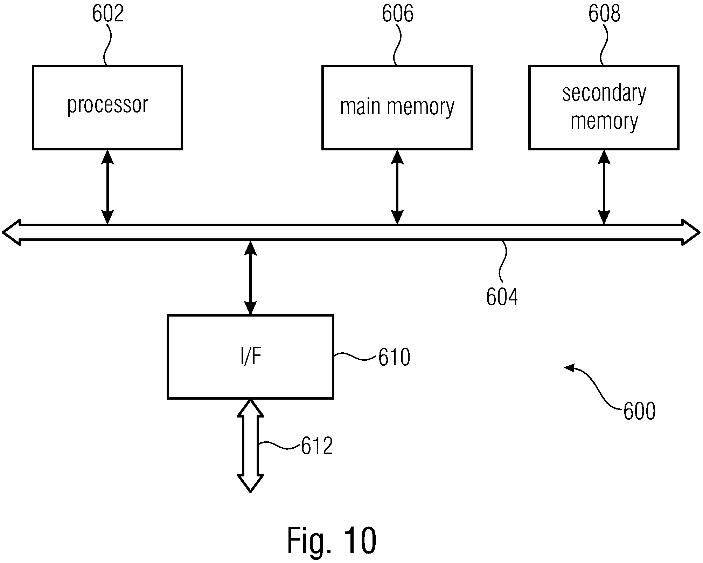

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. The figure below illustrates an example of a computer system 600 as shown in Fig. 10.

The units or modules as well as the steps of the methods performed by these units may execute on one or more computer systems 600. The computer system 600 includes one or more processors 602, like a special purpose or a general purpose digital signal processor. The processor 602 is connected to a communication infrastructure 604, like a bus or a network. The computer system 600 includes a main memory 606, e.g., a random access memory (RAM), and a secondary memory 608, e.g., a hard disk drive and/or a removable storage drive. The secondary memory 608 may allow computer programs or other instructions to be loaded into the computer system 600. The computer system 600 may further include a communications interface 610 to allow software and data to be transferred between computer system 600 and external devices. The communication may be in the form electronic, electromagnetic, optical, or other signals capable of being handled by a communications interface. The communication may use a wire or a cable, fiber optics, a phone line, a cellular phone link, an RF link and other communications channels 612.

The terms "computer program medium" and "computer readable medium" are used to generally refer to tangible storage media such as removable storage units or a hard disk installed in a hard disk drive. These computer program products are means for providing software to the computer system 600. The computer programs, also referred to as computer control logic, are stored in main memory 606 and/or secondary memory 608. Computer programs may also be received via the communications interface 610. The computer program, when executed, enables the computer system 600 to implement the present invention. In particular, the computer program, when executed, enables processor 602 to implement the processes of the present invention, such as any of the methods described herein. Accordingly, such a computer program may represent a controller of the computer system 600. Where the disclosure is implemented using software, the software may be stored in a computer program product and loaded into computer system 600 using a removable storage drive, an interface, like communications interface 610.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

**Claims**

1. An apparatus for obtaining a weighting matrix, the weighting matrix to be used to obtain one or more updated parameters affecting a time of response of a tracking loop;
wherein the apparatus is configured to
receive from a plurality of tracking loops respective loop dynamic estimates and/or loop noise estimates,
weight each of the received loop dynamic estimates and/or each of the received loop noise estimates based on a current value of the parameter of the tracking loop providing the respective loop dynamic estimates and/or the respective loop noise estimates, and combine the weighted loop dynamic estimates and/or the weighted loop noise estimates, so as to obtain the weighting matrix.

2. The apparatus according to claim 1 comprising:

   an input to receive the loop dynamic estimates and/or the loop noise estimates from each of the tracking loops,
   a first processing unit to weight each of the received loop dynamic estimates based on the current value of the parameter of the tracking loop providing the respective loop dynamic estimates, and/or
   a second processing unit to weight each of the received loop noise estimates based on the current value of the parameter of the tracking loop providing the respective loop noise estimates, and
   a third processing unit to combine the weighted loop dynamic estimates and/or the weighted loop noise estimates, so as to obtain a weighting matrix.

3. The apparatus according to claim 1 or 2, wherein the apparatus further comprises a first function, based on the current value of the parameter, which is used for obtaining the weighted loop dynamic estimates, and
a second function, based on the current value of the parameter, which is used for obtaining the weighted loop noise estimates.

4. The apparatus according to claim 3, wherein each of the first and second functions is a linear combination of space of functions.

5. The apparatus according to claims 1 to 4, wherein the apparatus is further configured to normalized the received loop dynamic estimates and/or the received loop noise estimates.

6. The apparatus according to claims 1 to 5, wherein the apparatus is further configured to combine the weighting matrix and the respective current value of the parameters to obtain and to provide respective updated parameters for the tracking loop.

7. The apparatus according to claims 1 to 6, wherein the parameter is any one of a loop-bandwidth, a noise bandwidth, a gain and an undamped natural frequency.

8. A receiver for determining user location information by processing signals broadcasted by satellites, comprising an apparatus according to claims 1 to 7,
a first estimator to estimate the loop dynamic estimates from each of the tracking loops, and to provide the respective loop dynamic estimates to the first input of the apparatus,
a second estimator to estimate the loop noise estimates from each of the tracking loops, and to provide the respective loop noise estimates to the second input of the apparatus, and
a plurality of tracking loops including each of them a loop filter, the tracking loops to receive respective updated loop-bandwidths for the loops filter from the apparatus.

9. The receiver according to claim 8, wherein the loop filter is a filter used in scalar tracking loops or any type of Kalman filter.

10. A method for obtaining a weighting matrix, the weighting matrix to be used to obtain one or more updated parameters affecting a time of response of a tracking loop, the method comprising:

receiving from a plurality of tracking loops respective loop dynamic estimates and/or loop noise estimates,
weighting each of the received loop dynamic estimates and/or each of the received loop noise estimates based on a current value of the parameter of the tracking loop providing the respective loop dynamic estimates and/or respective loop noise estimates, and
combining the weighted loop dynamic estimates and/or the weighted loop noise estimates,
so as to obtain a weighting matrix.

11. The method according to claim 10, wherein the method further comprises:
combining the weighting matrix and the respective current value of the parameters to obtain and to provide respective updated parameters for the tracking loops.

12. The method according to claim 10 or 11, wherein the parameter is any one of a loop-bandwidth, a noise bandwidth, a gain and an undamped natural frequency.

13. A computer program having a program code for performing, when running on computer, a method according to claims 10 to 12.

Fig. 1

Fig. 2

EP 3 816 672 A1

loop bandwidth (Bi)

input

processing unit ~12 ~10

Ci

Fig. 3

Fig. 4

EP 3 816 672 A1

Fig. 5

Fig. 6

Fig. 7

Fig. 8

Fig. 9

EP 3 816 672 A1

Fig. 10

Europäisches
Patentamt

European
Patent Office

Office européen
des brevets

# EUROPEAN SEARCH REPORT

**Application Number**

EP 19 20 5744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 398 034 A (SPILKER JR JAMES J [US]) 14 March 1995 (1995-03-14) * column 6, line 58 - column 7, line 52 * * column 7, line 63 - column 8, line 16 * * figure 2 * ----- | 1-13 | INV. G01S19/24 H04B7/185 |
| X | US 6 313 789 B1 (ZHODZISHSKY MARK [RU] ET AL) 6 November 2001 (2001-11-06) * column 2, line 14 - column 3, line 30 * * column 7, line 53 - column 8, line 28 * * column 11, line 37 - column 12, line 15 * * column 13, line 23 - line 45 * * column 14, line 59 - column 15, line 35 * * column 15, line 46 - column 16, line 23 * * column 20, line 47 - column 21, line 18 * * column 48, line 62 - column 49, line 12 * * figures 1, 1A, 2 * ----- | 1-13 | |
| A | MAO W-L ET AL: "Intelligent GPS receiver for robust carrier phase tracking in kinematic environments", IEE PROCEEDINGS: RADAR, SONAR & NAVIGATION, INSTITUTION OF ELECTRICAL ENGINEERS, GB, vol. 151, no. 3, 12 June 2004 (2004-06-12), pages 171-180, XP006021925, ISSN: 1350-2395, DOI: 10.1049/IP-RSN:20040188 * abstract * * 3. Proposed intelligent receiver * * figure 2 * ----- | 1-13 | TECHNICAL FIELDS SEARCHED (IPC) G01S H04W H04B |

The present search report has been drawn up for all claims

| Place of search | Date of completion of the search | Examiner |
|---|---|---|
| Munich | 3 April 2020 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 5744

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2020

| Patent document cited in search report | | Publication date | Patent family member(s) | | | Publication date |
|---|---|---|---|---|---|---|
| US 5398034 | A | 14-03-1995 | AU | 6492094 | A | 24-10-1994 |
| | | | JP | 3574929 | B2 | 06-10-2004 |
| | | | JP | H09501228 | A | 04-02-1997 |
| | | | TW | 245777 | B | 21-04-1995 |
| | | | US | 5398034 | A | 14-03-1995 |
| | | | WO | 9423505 | A1 | 13-10-1994 |
| US 6313789 | B1 | 06-11-2001 | NONE | | | |

EPO FORM P0459

For more details about this annex : see Official Journal of the European Patent Office, No. 12/82

**EP 3 816 672 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ELLIOT D. KAPLAN ; CHRISTOPHER J. HEGARTY.** Understanding GPS: Principles and Applications. Artech House, Inc, 2006
- **J.A. LÓPEZ-SALCEDO ; J. A. D. PERAL-ROSADO ; G. SECO-GRANADOS.** Survey on robust carrier tracking techniques. *IEEE Communication Surveys & Tutorials,* January 2014, vol. 12 (2), 670-688
- **D. M. B. MATTHEW LASHLEY ; J. Y. HUNG.** A valid comparison of vector and scalar tracking loops. *IEEE Transactions on Signal Processing,* April 2010, vol. 56 (9), 464-474
- **S. SKONE ; G. LACHAPELLE ; D. YAO ; W. YU ; R. WATSON.** Investigating the Impact of Ionospheric Scintillation using a GPS Software Receiver. *Proceedings of the 18th International Technical Meeting of the Satellite Division of The Institute of Navigation (ION GNSS 2005),* September 2005, 1126-1137
- **K. MUTHURAMAN.** *Tracking Techniques for GNSS Data/Pilot Signals*
- *Improvement Of Pseudorange Measurements Accuracy By Using Fast Adaptive Bandwidth Lock Loops,* September 2000
- **Y. W. YUAN CHEN ; HAIXIN ZHENG.** Adaptive Bandwidth PLL Design Based on Fuzzy Logic Control. *2011 4th IEEE International Symposium on Microwave, Antenna, Propagation and EMC Technologies for Wireless Communications,* November 2011, 645-648
- **X. SHUN, H. QIN ; J. NIU.** Comparison and analysis of GNSS signal tracking performance based on Kalman Filter and traditional loop. *WSEAS Transactions on Signal Processing,* 09 July 2013
- **J. H. WON ; B. EISSFELLER.** A tuning method based on signal-to noise ratio for adaptive PLL and its relationship with equivalent noise bandwidth. *IEEE Commun. Lett.,* February 2013, vol. 17 (2
- **J.-H. WON.** A novel adaptive digital phase-lock-loop for modern digital gnss receivers. *IEEE Communications Letters,* January 2014, vol. 18 (1), 46-49
- **K. H. KIM ; G. I. JEE ; J. H. SONG.** Carrier Tracking Loop using Adaptive Two-Stage Kalman Filter for High Dynamic Situations. *International Journal of Control, Automation and Systems,* December 2008, vol. 6 (6), 948-953